# EUROPEAN PATENT SPECIFICATION

(11) **EP 1 751 341 B1**
(45) Date of publication and mention of the grant of the patent: **26.01.2011**
(21) Application number: 05718696.7
(22) Date of filing: 11.04.2005
(51) Int. Cl.: D06F 37/20

(54) **A WASHER / DRYER**
WASCHTROCKNER
MACHINE A LAVER SECHANTE

(30) Priority: 14.04.2004 TR 200400782
(43) Date of publication of application: 14.02.2007
(73) Proprietor: Arçelik Anonim Sirketi, 34950 Istanbul (TR)
(72) Inventor: HIZAL, Sabih, Arcelik Anonim Sirketi, 34950 Istanbul (TR); GOKDERE, Nurgul, Arcelik Anonim Sirketi, 34950 Istanbul (TR); AYDINAY, Alper, Arcelik Anonim Sirketi, 34950 Istanbul (TR)
(86) International application number: PCT/IB2005/051189
(87) International publication number: WO 2005/100674

(56) References cited:
- DE-A1- 1 675 156
- GB-A- 626 720
- US-A- 5 887 455
- US-A- 5 934 107

## Description

This invention relates to a washer /dryer wherein means are provided to prevent the movable parts from hitting the body.

In washing / drying machines, the washing tank and the motor that is used to rotate the drum inside the washing tank, described as the dynamic system, oscillate in relation to the loading condition and the rotation speed. In washers / dryers wherein the drum is rotated by means of the belt and pulley mechanism of the motor, or in washers / dryers wherein the shaft of the motor directly actuates the drum, the motor is fixed to the washing tank resulting in the oscillation of the motor and the tank together. Dynamic system is attached to the body via attenuating elements and the oscillating motions formed under the effect of the loads are considerably balanced. A certain distance is left between the rear surface of the washing tank and the motor shaft, and the body of the washer / dryer in order the motor and the washing tank not to hit the body as a result of their axial oscillation, however, in situations where the space is limited, if the motor shaft and the washing tank oscillate axially with a high amplitude, they may cause damage by hitting the body or may cause the noise level to increase.

In the United States Patent Document US 5887455, a description is given of more than one vibration attenuating units placed between the outer body and the washing tank and, a sound attenuating mechanism composed of main and auxiliary dampers on the mentioned units. Further, US 5 934 107 A shows a washing machine with damping means for damping external impacts applied to the motor.

The aim of the present invention is the realization of a washer / dryer wherein such movable parts as the motor and the washing tank which oscillate under the effect of loading are prevented from contacting the body. This is achieved by a washer/dryer according to independent claim 1.

The washer / dryer realized in order to attain above mentioned aim of the invention is illustrated in the attached figures where:

Fig.1- is a schematic representation of a washer / dryer.

Fig.2 - is a sectional view of a bumper attached to the motor shaft.

Fig.3 - is a front view of a bumper.

Fig.4 - is a sectional view of a bumper taken from view A - A.

Fig.5 - is a sectional view of a bumper, in another embodiment of the present invention.

Fig.6 - is a sectional view of a bumper attached to the washing tank of a washer / dryer.

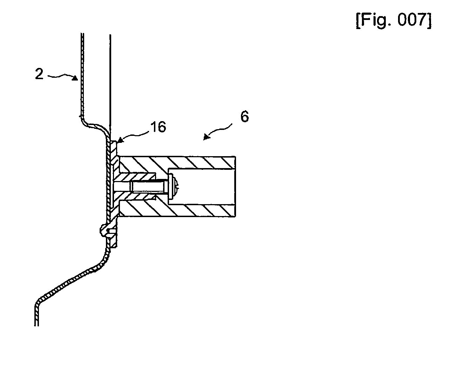

Fig.7 - is a sectional view of a bumper attached to the body of a washer / dryer.

The elements illustrated in the figures are numbered individually as follows:

1. Washer / dryer
2. Body
3. Drum
4. Washing tank
5. Motor
6. Bumper
7. Motor shaft
8. Pulley
9. Projection
10. Base
11. Contact surface
12. Wall
13. Washer
14. Bush
15. Skirt
16. Bumper connecting piece

The washer / dryer (1) comprises a body (2) protecting the operating parts, a drum (3) in which the laundry is placed, a washing tank (4) inside which the drum (3) moves, a motor (5) fixed to the washing tank (4) which motor (5) actuates the drum (3) and one or more bumpers (6) mounted onto at least one of the washing tank (4), motor (5) and body (2), bumpers (6) of which are positioned between the body (2) and the washing tank (4) or the motor (5) so as to prevent such movable parts as the motor (5) and washing tank (4) from hitting the body (2), especially the rear wall, while oscillating under the effect of factors such as insufficient loading of laundry and high rotation speed.

The motor (5) comprises a rotating motor shaft (7) and a pulley (8) which is a tight fit to the motor shaft (7) and whereby the rotary motion is transferred to the drum (3).

The washing tank (4) comprises more than one projection (9) on its rear wall, formed during molding process.

The bumper (6) comprises a base (10) whereby it is fixed to the motor shaft (7) or to the washing tank (4) by means of connection elements, a contact surface (11) which contacts the body (2) as the oscillation of the washing tank (4) and the motor (5) increases and a wall (12) surrounding the base (10) so as to prevent the connection elements such as a screw head from hitting the body (2).

In the embodiment of the present invention, the washer / dryer (1) comprises preferably two washers (13) positioned between the bumper (6) and the motor shaft (7), made of one or more materials with low coefficients of friction so that they can easily slide on each other, whereby it is achieved that the bumper (6) which is mounted to the motor shaft (7) can move about its axis independent of the motor shaft (7) and thus, that the bumper (6) rotating together with the motor shaft (7) becomes stationary as it contacts the body (2), while the motor shaft (7) rotates, especially at high revolutions, and, a bush (14) located at the center of the base (10), with a diameter permitting the connection element to pass with a clearance therethrough, which allows the connection element to be tightened up to a certain amount in order to facilitate that the bumper (6) becomes stationary on the rotating motor shaft (7).

In the mentioned embodiment, it is achieved that, while the motor shaft (7) rotates, the bumper (6) rotating together with the motor shaft (7) becomes stationary at the instant it contacts the body (2).

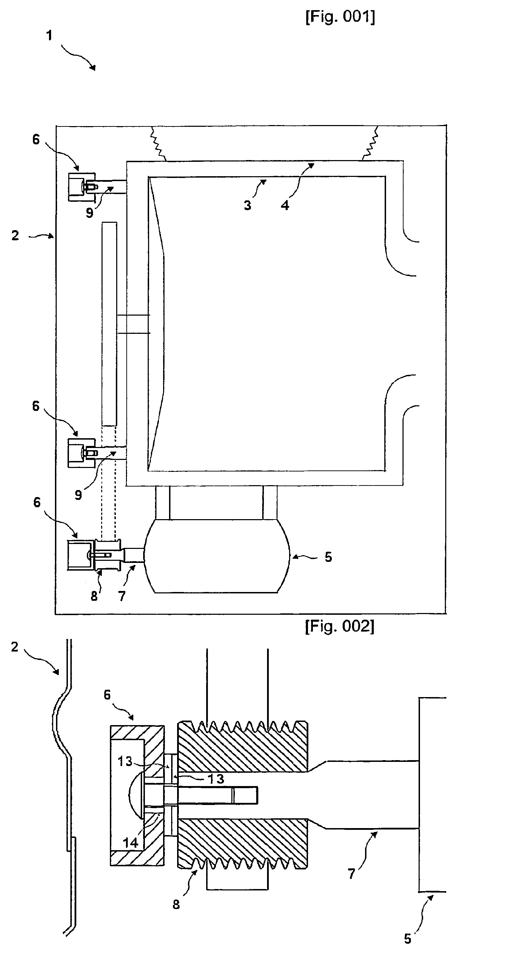

The bumper (6) manufactured from an elastic material, has U-form cross-section and is screwed to the countersink bore at the end of the motor shaft (7) by means of the bush (14) and the washers (13) (Figure 2).

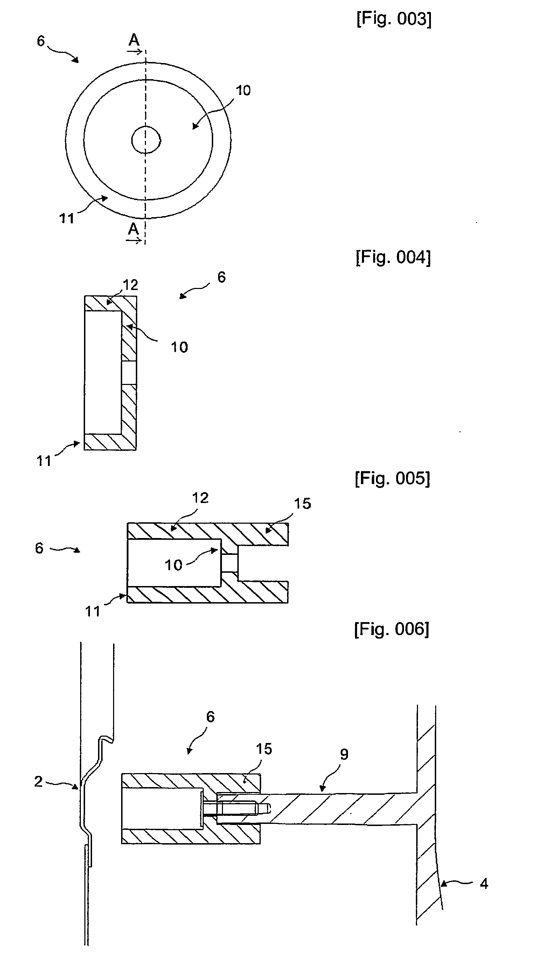

In another embodiment which does not form part of the present invention, the bumpers (6) are mounted to the projections on the washing tank (4) by means of connection elements. In the said embodiment, the bumper (6) manufactured from an elastic material, has H-form cross-section and comprises a skirt (15) surrounding the projection (9) providing that the bumper is attached to it (Figure 5).

In another embodiment which does not form part of the present invention, the bumper (6) is mounted to the body (2) by means of connection elements. In the mentioned embodiment, the washer / dryer (1) comprises a bumper connecting piece (16) facilitating the mounting of the bumper (6) to the body (2) (Figure 6).

By means of the bumpers (6) positioned between the body (2) and such movable parts as the washing tank (4) and the motor (5), it is prevented that the washing tank (4) and the motor (5) damage the surface by rubbing while oscillating under the effect of factors such as loading and number of the revolutions, especially while moving axially, and that the noise level is increased and also, it is achieved that the distance between the body (2) and the washing tank (4) and the motor (5) is reduced and thus, that advantages are gained in situations where space is limited.

## Claims

1. A washer / dryer (1) comprising; a body (2) protecting the operating parts; a drum (3) where the laundry is placed in; a washing tank (4) where the drum (3) moves inside; a motor (5) with a rotating motor shaft (7) which is fixed to the washing tank (4) and actuates the drum (3); and a bumper (6),
- which is positioned between the body (2) and the motor (5) so as to prevent such movable parts as the motor (5) and washing tank (4) from hitting the body (2) while oscillating, and
- which comprises a base (10) whereby it is mounted to the motor shaft (7) by means of connection elements and a contact surface (11) which contacts the body (2) as the oscillation of the washing tank (4) and the motor (5) increases; **characterised by** one or more washers (13) positioned between the bumper (6) and the motor shaft (7) whereby it is achieved that the bumper (6) is movable about its axis, independent of the motor shaft (7), so that the bumper (6) becomes stationary as it contacts the body (2) while the motor shaft (7) rotates.

2. A washer / dryer (1) as described in Claim 1, **characterized by** the bumper (6) which comprises a wall (12) surrounding the base (10) so as to prevent the connection elements such as a screw head from hitting the body (2).

3. A washer / dryer (1) as described in Claims 1 or 2, **characterized by** washers (13) with low coefficients of friction, so that they can easily slide on each other, positioned between the bumper (6) and the motor shaft (7).

4. A washer / dryer (1) as described in any of the above Claims, **characterized by** a bush (14) located at the center of the base (10), with a diameter permitting the connection element to pass with a clearance therethrough, which allows the connection element to be tightened up to a certain amount.

5. A washer / dryer (1) as described in any of the above Claims, **characterized by** a bumper (6) manufactured from an elastic material, having U-form cross-section and, screwed to the countersink bore at the end of the motor shaft (7).

## Patentansprüche

1. Wasch-/Trockenmaschine (1), umfassend ein Gehäuse (2), das die Betriebsteile schützt; eine Trommel (3), in die die Wäsche gegeben wird; einen Waschbehälter (4), in dem sich die Trommel (3) bewegt; einen Motor (5) mit einer rotierenden Motorwelle (7), der am Waschbehälter (4) befestigt ist und die Trommel (3) betätigt; und eine Stoßleiste (6),
- die zwischen dem Gehäuse (2) und dem Motor (5) angeordnet ist, um zu verhindern, dass bewegliche Teile wie der Motor (5) und der Waschbehälter (4) während der Schwingung gegen das Gehäuse (2) stoßen, und
- die eine Basis (10) umfasst, mit der sie mittels Verbindungselementen an die Motorwelle (7) montiert ist, und eine Kontaktfläche (11), die in Kontakt mit dem Gehäuse (2) gelangt, wenn die Schwingung des Waschbehälters (4) und des Motors (5) zunimmt; **gekennzeichnet durch** eine oder mehrere Distanzscheiben (13), die zwischen der Stoßleiste (6) und der Motorwelle (7) angeordnet sind, wodurch erreicht wird, dass die Stoßleiste (6) unabhängig von der Motorwelle (7) um ihre Achse beweglich ist, derart, dass die Stoßleiste (6) sich nicht mehr bewegt, wenn sie mit dem Gehäuse (2) in Kontakt gelangt, während sich die Motorwelle (7) dreht.

2. Wasch-/Trockenmaschine (1) nach Anspruch 1, **dadurch gekennzeichnet, dass** die Stoßleiste (6) eine Wand (12) umfasst, die die Basis (10) umgibt, um zu verhindern, dass die Verbindungselemente wie z. B. ein Schraubkopf gegen das Gehäuse (2) stoßen.

3. Wasch-/Trockenmaschine (1) nach Anspruch 1 oder 2, **gekennzeichnet durch** Distanzscheiben (13) mit geringem Reibungskoeffizient, derart, dass sie leicht aneinander gleiten können, und die zwischen der Stoßleiste (6) und der Motorwelle (7) angeordnet sind.

4. Wasch-/Trockenmaschine (1) nach einem der vorangehenden Ansprüche, **gekennzeichnet durch** eine Hülse (14), die in der Mitte der Basis (10) angeordnet ist und eine Durchmesser aufweist, der zulässt, dass das Verbindungselement mit Spiel **dadurch** hindurchtritt, wodurch das Verbindungselement in gewissem Maß angezogen wird.

5. Wasch-/Trockenmaschine (1) nach einem der vorangehenden Ansprüche, **gekennzeichnet durch** eine Stoßleiste (6), die aus einem elastischen Material hergestellt ist, einen U-förmigen Querschnitt aufweist und am Ende der Motorwelle (7) an die Senkbohrung geschraubt ist.

## Revendications

1. Une machine à laver/sécher (1) comprenant un corps (2) protégeant les pièces qui opèrent, un tambour (3) dans lequel la lessive est placée, une cuve de lavage (4) dans laquelle le tambour (3) se déplace, un moteur (5) avec un axe de moteur rotatif (7) qui est fixé à la cuve de lavage (4) et actionne le tambour (3), et un pare-chocs (6),
- qui est positionné entre le corps (2) et le moteur (5) de telle sorte que les pièces qui opèrent comme le moteur (5) et la cuve de lavage (4) soient empêchées de frapper le corps (2) tout en oscillant, et
- qui comprend une base (10) par laquelle il est monté à l'axe de moteur (7) au moyen d'éléments de connexion et une surface de contact (11) qui est en contact avec le corps (2) comme l'oscillation de la cuve de lavage (4) et le moteur (5) augmentent, **caractérisée par** une ou plusieurs rondelles (13) positionnées entre le pare-chocs (6) et l'axe de moteur (7) où on obtient que le pare-chocs (6) est mobile autour de son axe, indépendante de l'axe de moteur (7), de telle sorte que le pare-chocs (6) devienne stationnaire lorsqu'il touche le corps (2) pendant que l'axe de moteur (7) tourne.

2. Une machine à laver/sécher (1) selon la Revendication 1, **caractérisée par** le pare-chocs (6) qui comprend une paroi (12) entourant la base (10) de manière à empêcher les éléments de connexion, comme une tête de vis de frapper le corps (2).

3. Une machine à laver/sécher (1) selon la Revendication 1 ou 2, **caractérisée par** des rondelles (13) à faible coefficient de frottement, de sorte qu'elles puissent facilement glisser sur l'autre, positionnées entre le pare-chocs (6) et l'axe de moteur (7).

4. Une machine à laver/sécher (1) selon l'une quelconque des revendications précédentes, **caractérisée par** une bague (14) située au centre de la base (10), avec un diamètre permettant à l'élément de connexion de passer avec un espace à travers de celle-ci, qui permet à l'élément de connexion d'être serré jusqu'à une certaine quantité.

5. Une machine à laver/sécher (1) selon l'une quelconque des revendications précédentes, **caractérisée par** un pare-chocs (6) fabriqué d'un matériel élastique, ayant une section en forme d'U et, vissés à la fraise creusé au bout de l'axe de moteur (7).
